# EUROPÄISCHE PATENTSCHRIFT

(11) **EP 0 538 324 B1**
(45) Veröffentlichungstag und Bekanntmachung des Hinweises auf die Patenterteilung: **06.03.1996**
(21) Anmeldenummer: 91912650.8
(22) Anmeldetag: 05.07.1991
(51) Int. Cl.: H04N 5/63, H02M 3/335

(54) **Verfahren zum Betreiben eines SCHALTNETZTEILs FÜR EINEN FERNSEHEMPFÄNGER**
Method for operating a COMBINATORIAL CIRCUIT COMPONENT FOR A TELEVISION RECEIVER
Procédé por actionner un COMPOSANT DE CIRCUITS COMBINATOIRES POUR POSTES RECEPTEURS DE TELEVISION

(30) Priorität: 10.07.1990 DE 4021940
(43) Veröffentlichungstag der Anmeldung: 28.04.1993
(73) Patentinhaber: DEUTSCHE THOMSON-BRANDT GMBH, D-78048 Villingen-Schwenningen (DE)
(72) Erfinder: KOBLITZ, Rudolf, F-38240 Meylan (FR); LEHR, Steffen, D-7730 VS-Marbach (DE); DIETERLE, Franz, D-7622 Schiltach (DE)
(86) Internationale Anmeldenummer: EP9101260
(87) Internationale Veröffentlichungsnummer: WO9201355

(56) Entgegenhaltungen:
- EP-A- 0 291 742
- DE-A- 2 651 196
- US-A- 4 209 826
- IEEE Transactions on Consumer Electronics, Band 36, Nr. 1, Februar 1990, New York, US; P. Maige et al.: "A universal power supply integrated circuit for TV and monitor applications", Seiten 10-17

## Beschreibung

Die Erfindung geht aus von einem Verfahren gemäß dem Oberbegriff des Anspruchs 1.

Bei einem derartigen Schaltnetzteil wird im sogenannten Standby-Betrieb nur eine geringe Leistung iibertragen, indem der Schalttransistor periodisch von Impulspaketen (Burst-Betrieb) leitend gesteuert ist. Beim Einschalten des Fernsehempfängers wird ein sogenannter Anlaufbetrieb oder Startup-Betrieb eingeleitet, der den Übergang vom Standby-Betrieb in den Normalbetrieb oder ON-Betrieb einleitet. Im ON-Betrieb ist die übertragene Leistung durch Vergrößerung der Einschaltdauer des Schalttransistors auf den Nennwert erhöht. Bei dem Übergang vom Standby-Betrieb in den ON-Betrieb, also während des Startup-Betriebes, besteht die Gefahr, daß durch undefinierte Vorgänge am Schalttransistor gleichzeitig nennenswerte Spannungs- und Stromwerte am Transistor auftreten. Diese können zu einer unzulässig hohen Verlustleistung führen, die den Schalttransistor gefährdet.

Der Erfindung liegt die Aufgabe zugrunde, ein Verfahren zum Betreiben eines zu schaffen, bei dem bei Übergang vom Standby-Betrieb in den ON-Betrieb, also während des Startup-Betriebes, eine Gefährdung des Transistors ausgeschlossen wird.

Diese Aufgabe wird durch die im Anspruch 1 angegebene Erfindung gelöst. Vorteilhafte Weiterbildungen der Erfindung sind in den Unteransprüchen angegeben.

Bei der Erfindung wird also eine definierte, kontrollierte Startphase geschaffen und dadurch eine Gefährdung des Schalttransistors durch eine zu hohe Verlustleistung ausgeschlossen. Der schaltungstechnische Aufwand indessen ist gering, da die Schaltung zur Erzeugung der beschriebenen Wirkungsweise in einem IC realisiert werden kann.

Die Erfindung wird im folgenden anhand der Zeichnung erläutert. Darin zeigen
- Fig. 1: Diagramme zur Erläuterung der erfindungsgemäßen Wirkung des Schaltnetzteils,
- Fig. 2: eine Ergänzung zu Fig. 1 und
- Fig. 3: einen integrierten Schaltkreis zur Realisierung der Erfindung.

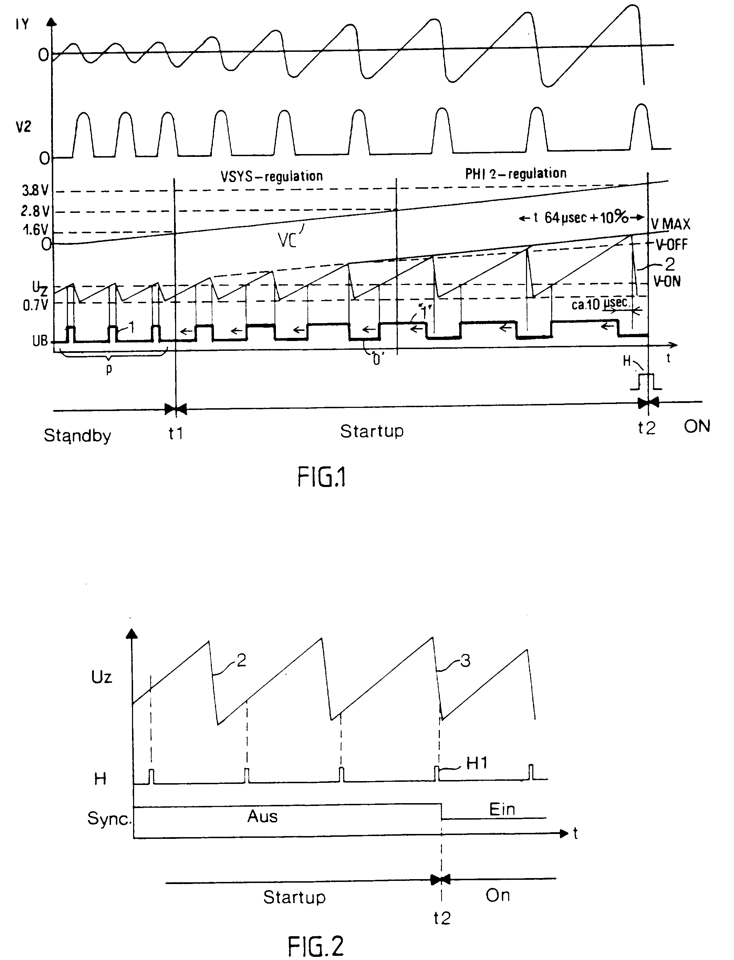

Fig. 1 zeigt den Strom Iy durch die Arbeitswicklung des Transformators des Schaltnetzteils, die in Reihe mit dem Schalttransistor an die Betriebsspannung angeschlossen ist. V2 stellt die zu Iy gehörenden Rücklaufimpulse jeweils bei der Abschaltung des Schalttransistors dar. Während des Stand-by-Betriebes bis zum Zeitpunkt tl wird der Schalttransistor durch die Spannung UB aus Paketen P mit kurzen Impulsen 1 mit der Dauer von etwa 3 µs periodisch leitend gesteuert. Die Periodendauer der impulse beträgt etwa 28 µs, was etwa der doppelten Zeilenfrequenz 2 fH entspricht. Zwischen den einzelnen Paketen P aus den Impulsen 1 liegen Pausen, während der der Schalttransistor gesperrt bleibt. Die Dauer der Pakete P ist so bemessen und geregelt, daß im Standby-Betrieb nur die für Standby notwendige geringe Leistung von ca 1 - 5 Watt übertragen wird. Die Impulse 1 werden aus der Sägezahnspannung Uz, die die Frequenz von Iy und V2 hat, mittels einer Schwellwertschaltung mit den Schwellwerten V-ON und V-OFF erzeugt. Jeweils beim Überschreiten von V-ON nimmt die Spannung UB an der Basis des Schalttransistors den Wert "1" an, durch die der Schalttransistor leitend gesteuert wird. Jeweils beim Unterschreiten von V-OFF geht UB auf den Wert "0", bei dem der Schalttransistor gesperrt wird. Eine derartige Schaltung für Standby-Betrieb ist näher beschrieben in der älteren Patentanmeldung DE-A-40 14 833 (veröff. 14.11.91).

Im Zeitpunkt t1 wird der Fernsehempfänger von einer Fernbedienung eingeschaltet. Bei t1 treten in der Schaltung die Zeilensynchronimpulse des empfangenen Fernsehsignals auf. Mit dem Auftreten der Zeilensynchronimpulse wird die von t1 an kontinuierlich ansteigende Spannung Vc erzeugt. Vc ändert jetzt Amplitude und Frequenz der Spannung Uz derart, daß die Periodendauer von UB langsam erhöht, also die Frequenz verringert wird. Dabei wird die Einschaltdauer des Schalttransistors, dargestellt durch den Wert "1" von UB, kontinuierlich erhöht, während der Ausschaltzeitpunkt zunächst gleich bleibt. Die abfallende Frequenz von UB ändert sich somit in Richtung der Zeilenfrequenz des empfangenen Signals, also einer Periodendauer von 64 µs. Die Schaltung ist bisher durch die Zeilensynchronimpulse nicht synchronisiert. Nachdem die Spannung VC eine bestimmte Schwelle überschritten hat, bestimmen zwei Regelschleifen die Schwellspannungen V-ON und V-OFF. Der Einschaltzeitpunkt von UB (durch die Spannung V-ON repräsentiert) wird durch die Regelung der System-spannung VSYS bestimmt. Der Ausschaltzeitpunkt (durch die Spannung V-OFF repräsentiert) wird durch eine PHI2-Regelung bestimmt.

Im Zeitpunkt t2 überschreitet die Periodendauer von UB die Periodendauer des empfangenen Signals um ca 10 %. Zu diesem Zeitpunkt fällt der empfangene Zeilensynchronimpuls H mit einer abfallenden Flanke von Uz zusammen. Dies ist die Bedingung für die Synchronisierung der Schaltung auf die Zeilenfrequenz des empfangenen Signals. Gleichzeitig arbeiten Regelschaltungen zur Stabilisierung der erzeugten Betriebsspannungen. Die Schaltung arbeitet nun im Normalbetrieb, auch ON-Betrieb genannt. Die Periodendauer der Spannung UB ist ab t2 ständig mit der Zeilenfrequenz des empfangenen Signals, also auf Zeilendauer 64 µsec synchronisiert.

Fig. 2 zeigt die Annäherung des ON-Betriebes kurz vor dem Zeitpunkt t2. Die Zeilensynchronimpulse H fallen zunächst nicht mit einer abfallenden Flanke 2 von Uz zusammen. Die Synchronisierung der Schaltung bleibt daher ausgeschaltet. Bei t2 wird das Zusammenfallen der abfallenden Flanke 3 von Uz mit dem Zeilensynchronimpuls H1 festgestellt. Daraufhin werden die Synchronisierung der Schaltung auf die Zeilenfrequenz und somit der stationäre ON-Betrieb eingeschaltet.

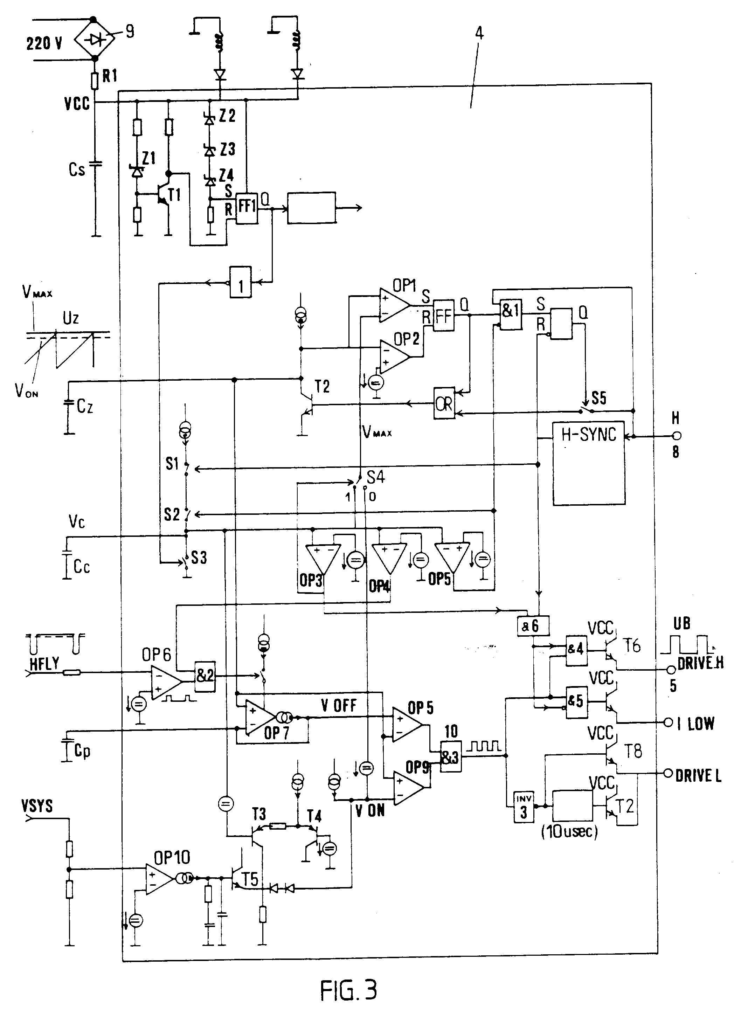

Fig. 3 zeigt einen integrierten Schaltkreis 4, der an der Klemme 5 die Spannung UB für den Schalttransistor des Schaltnetzteils in der für Standby, Startup ON-Betrieb beschriebenen Weise erzeugt. Die Klemme 5 ist über bekannte Treiberschaltungen und Vorspannungs-Netzwerke an die Basis des Schalttransistors des Schaltnetzteils angeschlossen und steuert diesen periodisch in den leitenden oder gesperrten Zustand. Der Schalttransistor liegt in Reihe mit der Primärwicklung des Transformators des Schaltnetzteils zwischen der Betriebsspannung VCC und Erde. An dem Kondensator Cz steht die Spannung Uz. An dem Kondensator Cc steht die Spannung Vc. Die Zeilensynchronimpulse H mit der Frequenz fH werden der Schaltung an der Klemme 8 zugeführt. Mit dem Gleichrichter 9 wird aus der Netzspannung an dem Kondensator Cs die Betriebsspannung VCC für das Schaltnetzteil erzeugt. Der Schaltkreis 4 arbeitet auf folgende Weise:
1) OFF-Zustand
   Es liegt keine Spannung an. Das ist der vollständig ausgeschaltete Zustand ohne Spannungen und Ströme.
2) Übergang vom OFF- in den Standby-Zustand
   Wird das Netz eingeschaltet, lädt sich der Ladekondensator Cs vom Netzgleichrichter 9 über R1 auf. Dabei bleiben die Ausgänge des IC4 inaktiv. Erst wenn die Spannung VCC die Zenerspannung von Z2 bis Z4 überstiegen hat, kann die BANDGAP über das Flip-Flop FF1 in Betrieb gesetzt werden. Es ist dann der STANDBY-Zustand erreicht.
3) STANDBY-Zustand
   Ist das Flip-Flop FF1 gesetzt, ist auch der Schalter S3 offen. Liegt kein H-SYNC-Signal H an der Klemme 8 an, bleibt S1 offen, und der Kondensator Cc, an dem die Spannung Vc steht, kann sich nicht aufladen. Der Schalter S2 ist zu diesem Zeitpunkt geschlossen. Da Cc entladen ist, leitet T3. Der Strom durch T3 ist durch eine Stromquelle bestimmt und generiert die Spannungen V ON und V MAX. Die Spannung V MAX gelangt über S4 zum Sägezahnoszillator und bestimmt dort die höchste Spannung des Sägezahns Uz. Der Oszillator funktioniert folgendermaßen. Mit einer Stromquelle wird Cz aufgeladen. Erreicht die Spannung an Cz die Spannung V MAX, wird FF2 gesetzt, und Cz wird über T2 entladen. Die Entladung wird gestoppt, wenn die Sägezahnspannung Uz 0.7V unterschreitet. Dann liefert 0P2 das Reset-Signal für FF2. Aus dieser Sägezahnspannung wird mit OP8 und 0P9 ein Rechtecksignal erzeugt. Durch eine nicht gezeigte Schaltungsmaßnahme wird dafür gesorgt, daß die Spannung an Cp höher als V MAX ist. Deshalb bestimmt im STANDBY nur V ON die Impulsbreite des Rechteckpulses am Ausgang des UND-Gatters 10. Sie beträgt ca 3 µs bei einer Periodendauer von 28 µs. Dieser Rechteckpuls steuert die Ausgangsstufe. Hier sind im Standby die Ausgänge I LOW und DRIVE L aktiv. Sie steuern die Ansteuerung des Leistungstransistors des Schaltnetzteils. Liegen H SYNC-Signale an der Klemme 8 an, geht die Schaltung in den STARTUP-Zustand. Der Burst-Mode im STANDBY in Form der Pakete P gemäß Fig. 1 ist hier nicht berücksichtigt worden, um die Schaltung übersichtlich zu halten.
4) STARTUP-Zustand
   Nun werden die Synchronisationssignale H erkannt und S1 geschloßen. Cz lädt sich nun über eine Stromquelle auf. Solange die Spannung an Cz unter 1.6V bleibt ändert sich an den Ausgangsspannungen gegenüber dem STANDBY-Zustand nichts. Überschreitet die Spannung an Cz 1.6V, wird V MAX von der Spannung an Cz bestimmt, da S4 nun umschaltet. Daraus resultiert, wegen der immer noch unveränderten Spannung V ON, eine wachsende Impulsbreite der Rechteckimpulse am Ausgang des UND-Gatters 10. Ebenso wird der Ausgang I LOW abgeschaltet und durch DRIVE H ersetzt. Überschreitet die Spannung an Cz 2.8V, tritt die PHI2-Regelung in Aktion.

Der HFLY-Puls hat das in der Schaltung angedeutete Aussehen. Nur wenn die negativen Pulse dieses Signals auftreten, wird OP7 mit Strom versorgt. OP7 vergleicht in dieser Zeit die Sägezahnspannung und die Spannung an Cp. Die Spannung an Cp erreicht dann das Gleichgewicht, wenn die fallende Flanke des Sägezahns Uz mit der Mitte des negativen HFLY-Pulses übereinstimmt. Die Spannung an Cp wird mit V OFF bezeichnet und bestimmt den Ausschaltzeitpunkt des Rechteckimpulses. Im eingeregelten Zustand kommt die abfallende Flanke des Rechtecksignals etwa 10 µs früher als die abfallende Flanke des Sägezahns Uz. Dadurch wird verhindert, das ein nachfolgendes Einschalten des Leistungstransistors während des Zeilenrücklaufs auftreten kann und es wird ein größtmöglicher Regelbereich für die Einschaltzeit des Leistungstransistors erreicht. Etwa zu diesem Zeitpunkt beginnt auch die Regelung der System-Spannung VSYS zu arbeiten. Bei steigender Spannung an Cc wird immer mehr T4 leitend und die VSYS-Regelung übernimmt die Regelung der Spannung V ON. In Fig. 1 ist wegen der besseren Übersicht, das Einsetzen der VSYS-Regelung sofort nach dem Zeitpunkt t1 eingezeichnet. Nach einer Spannungsteilung wird VSYS mit einer Referenzspannung verglichen. Der Stromausgang des OP10 erzeugt an der Basis von T5 eine Spannung, welche dann die Spannung V ON beeinflußt und für den Zeitpunkt der steigenden Flanke des Rechteckpulses verantwortlich ist. Die VSYS-Regelung regelt die Leistungsübertragung des Zeilentransformators. Überschreitet die Spannung an Cc 3.8V, ist der STARTUP-Vorgang abgeschlossen. S2 ist nun offen und verhindert ein weiteres Aufladen von Cc. Nun kann das Flip-Flop FF3 gesetzt werden, wenn gleichzeitig ein H-SYNC-Impuls und die abfallende Flanke des Sägezahns auftreten. Dadurch wird der Sägezahnoszillator mit dem H SYNC-Signal H synchronisiert. Die Schaltung geht in den ON-Zustand über. Am Ende des STARTUP-Zustandes ist die Periodendauer von Uz um 10 % länger als die Periodendauer der H-SYNC-Impulse H. Dadurch ist sichergestellt, daß im ON Zustand die Ansteuerung von T2 nur durch die H-SYNC-Signale ausgelöst wird.

## Patentansprüche

1. Verfahren zum betreiben eines Schaltnetzteils für einen Fernsehempfänger mit einem Schalttransistor, der im Standby-Betrieb, im Startup-Betrieb und im ON-Betrieb während unterschiedlich langer Zeiträume periodisch leitend gesteuert wird, **gekennzeichnet** durch folgende Merkmale:
a) Während des Standby-Betriebs wird der Schalter unsynchronisiert von durch Pausen getrennten Paketen (P) mit Impulsen (1) mit einer oberhalb der Zeilenfrequenz liegenden Frequenz leitend gesteuert.
b) Während des Startup-Betriebes wird die Frequenz der Impulse bei steigender Einschaltzeit und gleichbleibender Ausschaltzeit des Schalttransistors kontinuierlich verringert, wobei die Einschaltzeitdauer des Leistungstransistors durch eine PHI2-Regelung und einer Regelung zur Stabilisierung der erzeugten Betriebsspannungen bestimmt wird, sobald eine zur Erzeugung der Impulse (1) dienende Spannung (Uz) einen Schwellwert überschreitet.
c) Zu Beginn des ON-Betriebs wird die Synchronisierung auf die Zeilenfrequenz eingeschaltet, und es erfolgt eine Regelung der Einschaltdauer zur Stabilisierung der erzeugten Betriebsspannungen.

2. Verfahren nach Anspruch 1, **dadurch gekennzeichnet**, daß der Startup-Betrieb durch das Auftreten von Zeilensynchronimpulsen (H) eingeleitet wird.

3. Verfahren nach Anspruch 1, **dadurch gekennzeichnet**, daß bei Beginn des Startup-Betriebs eine kontinuierlich ansteigende Spannung (Vc) erzeugt wird, die Amplitude und Periodendauer einer Sägezahnspannung (Uz) kontinuierlich erhöht , und daß aus der Sägezahnspannung (Uz) über eine Schwellwertschaltung die Schaltspannung (UB) zur Steuerung des Schalttransistors gewonnen wird.

4. Verfahren nach Anspruch 3, **dadurch gekennzeichnet**, daß der ON-Betrieb dann eingeleitet wird, wenn der Zeilensynchronimpuls (H) mit einer Flanke der Oszillatorspannung (Uz) zusammenfällt.

5. Verfahren nach Anspruch 1, **dadurch gekennzeichnet**, daß die Dauer der Pakete von Impulsen im Standby-Betrieb zur Regelung der übertragenen Standby-Leistung gesteuert wird.

## Claims

1. A method for operating a switched mode power supply for a television receiver with a switching transistor which is periodically controlled to be conducting during periods of differing lengths in stand-by mode, in start-up mode and in ON mode, **characterised by** the following features:
a) During the stand-by mode, the switch is controlled to be conducting with a frequency above the line frequency in an un-synchronized way by means of packets (P) with pulses (1) separated by intervals.
b) During the start-up mode, the frequency of the pulses with increasing switch-on time and constant switch-off time of the switching transistor is continuously reduced, the duration of the switch-on time of the power transistor being determined by a PHI2 regulation and a regulation for stabilizing the operating voltages generated, as soon as a voltage (Uz) serving to generate the pulses (1) exceeds a threshold value.
c) At the start of the ON mode, the synchronization onto the line frequency is switched on and a regulation of the switch-on duration for stabilizing the operating voltages generated is carried out.

2. A method according to claim 1, **characterised in that** the start-up mode is initiated by the appearance of line synchronizing pulses (H).

3. A method according to claim 1, **characterised in that** at the beginning of the start-up mode a continuously increasing voltage (Vc) is generated, the amplitude and period length of a sawtooth voltage (Uz) are continuously raised, and that the switching voltage (UB) for controlling the switching transistor is obtained from the sawtooth voltage (Uz) via a threshold value circuit.

4. A method according to claim 3, **characterised in that** the ON mode is initiated when the line synchronizing pulse (H) coincides with a flank of the oscillator voltage (Uz).

5. A method according to claim 1, **characterised in that** in the stand-by mode the duration of the packets of pulses is controlled for the regulation of the stand-by power transmitted.

## Revendications

1. Procédé pour exploiter une alimentation à commutation pour un téléviseur comportant un transistor de commutation qui, en mode VEILLE, mode DEMARRAGE et mode MARCHE, est connecté périodiquement pour une durée variable, **procédé caractérisé en ce qui suit :**
a) En mode VEILLE, le commutateur est connecté de façon non synchronisée, par des giclées (P) d'impulsions (1) séparées par des intervalles et dont la fréquence est supérieure à la fréquence de ligne.
b) En mode DEMARRAGE, la fréquence des impulsions est réduite de façon continue pendant que le temps de fonctionnement du transistor de commutation augmente et que son temps d'arrêt demeure constant, sachant que la durée de fonctionnement du transistor de puissance est déterminé par un réglage PHl2 et un réglage pour la stabilisation des tensions de service générées, dès qu'une tension (Uz) servant à produire les impulsions (1) dépasse un certain seuil.
c) Au début du mode MARCHE, la synchronisation à la fréquence de ligne est mise en service, puis un réglage de la durée de fonctionnement est effectué pour stabiliser les tensions de service générées.

2. Procédé selon la revendication 1 **caractérisé en ce** que le début du mode dE DEMARRAGE est marqué par l'apparition d'impulsions de synchronisation de lignes (H).

3. Procédé selon la revendication 1 **caractérisé en ce** qu'une tension croissant er continu (Vc) est générée au début du mode de DEMARRAGE, cette tensior variant de manière continue l'amplitude et la durée de période d'une tension er dents de scie (Uz), et caractérisé en outre en ce que la tension de commutatior (UB) servant à commander le transistor de commutation est obtenue à partir de ladite tension en dents de scie (Uz).

4. Procédé selon la revendication 3 **caractérisé en ce** que le mode MARCHE est lancé lorsque l'impulsion de synchronisation de ligne (H) coïncide avec un flanc de la tension oscillatoire (Uz).

5. Procédé selon la revendication 1 **caractérisé en ce** que la durée des giclées d'impulsions en mode VEILLE est contrôlée pour assurer le réglage de la puissance transmise en VEILLE.
